(19) **Europäisches Patentamt**
**European Patent Office**
**Office européen des brevets**

(11) **EP 3 535 111 B1**

(12) **FASCICULE DE BREVET EUROPEEN**

(45) Date de publication et mention
de la délivrance du brevet:
**17.02.2021 Bulletin 2021/07**

(51) Int Cl.:
*B29C 65/36* (2006.01)   *F16L 47/02* (2006.01)
*F16L 59/20* (2006.01)   *B29L 23/00* (2006.01)
*B29L 9/00* (2006.01)   *B29K 101/12* (2006.01)
*B29K 705/12* (2006.01)

(21) Numéro de dépôt: **17797407.8**

(22) Date de dépôt: **24.10.2017**

(86) Numéro de dépôt international:
**PCT/FR2017/052931**

(87) Numéro de publication internationale:
**WO 2018/083397 (11.05.2018 Gazette 2018/19)**

(54) **MÉTHODE D'ASSEMBLAGE DE TUBES THERMOPLASTIQUES PAR SOUDAGE PAR INDUCTION**

VERFAHREN ZUR MONTAGE VON THERMOPLASTISCHEN ROHREN DURCH INDUKTIONSSCHWEISSEN

METHOD FOR ASSEMBLING THERMOPLASTIC TUBES BY INDUCTION WELDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2016 FR 1660718**

(43) Date de publication de la demande:
**11.09.2019 Bulletin 2019/37**

(73) Titulaire: **SAIPEM S.A.**
**78180 Montigny Le Bretonneux (FR)**

(72) Inventeurs:
• **PIONETTI, François-Régis**
**50450 La Baleine (FR)**
• **MAJDOUB, Taoufik**
**93000 Bobigny (FR)**

• **SUNDERMANN, Axel**
**91640 Fontenay-Les-Briis (FR)**
• **AGOUMI, Jalil**
**94270 Le Kremlin-Bicetre (FR)**

(74) Mandataire: **Cabinet Beau de Loménie**
**158, rue de l'Université**
**75340 Paris Cedex 07 (FR)**

(56) Documents cités:
EP-A1- 2 452 805   EP-A1- 2 886 285
WO-A1-96/28683   WO-A1-2012/051719
WO-A1-2018/065769   WO-A2-2004/106038
WO-A2-2007/128384   DE-A1- 2 136 656
DE-A1- 19 718 790   JP-A- H0 584 829
JP-A- H03 129 195   JP-A- H09 150 458
US-A1- 2013 228 265

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne une méthode d'assemblage par soudage par induction de tubes en matériaux thermoplastiques. Plus particulièrement, la présente invention s'applique à l'assemblage d'au moins deux tubes disposés bout à bout ou se chevauchant au moins en partie coaxialement.

La présente invention se rapporte au domaine général des conduites de transport de fluide, notamment des conduites sous-marines, reposant au fond de la mer ou assurant la liaison fond-surface pour le transfert d'hydrocarbures, par exemple de pétrole et de gaz, issus de puits de production sous-marins. La présente invention se rapporte plus particulièrement à l'assemblage de conduites sous-marines véhiculant des fluides corrosifs, notamment de l'eau de mer sous pression destinée à être injectée dans des puits de champs pétroliers.

Ces conduites sous-marines comprennent généralement un tube en alliage d'acier qui est recouvert d'un revêtement isolant externe et/ou d'un revêtement interne ou chemisage interne dénommé liner, typiquement un polymère thermoplastique. Ces deux revêtements limitent la déperdition de chaleur vers le milieu ambiant et/ou le protègent de la corrosion. L'épaisseur de ces revêtements varie suivant les conditions d'exploitation du fluide à transporter (longueur de la conduite, température du fluide, composition du fluide, etc.).

La présente invention concerne plus particulièrement le raccordement entre deux éléments unitaires de telles conduites équipées de revêtements(s) interne.

Généralement, ces conduites sont assemblées à terre en éléments de longueur unitaire (on parle de double, triple ou quadruple joints, ci-après indifféremment dénommées « quad-joints » pour quadruple sections de tube). Ces quad-joints sont alors transportées en mer sur un navire de pose. Lors de la pose, les quad-joints sont raccordés les uns aux autres à bord du navire et au fur et à mesure de leur pose en mer. La pose peut s'effectuer par l'intermédiaire d'une tour de pose en J ou en S positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin.

Les techniques de pose en J et en S nécessitent de raccorder sur le navire de pose chaque nouveau quad-joint à la conduite sous-marine avant de le descendre dans la mer en déplaçant le navire de pose. Cette étape de raccordement du nouveau quad-joint à la conduite sous-marine s'effectue en soudant bout à bout les extrémités libres en acier des tubes respectifs du nouveau quad-joint et de la conduite sous-marine. Le raccordement du nouveau quad-joint et de la conduite sous-marine isolée est rendu possible par une opération préliminaire réalisée après le revêtement et/ou le chemisage interne en usine des quad-joints, cette opération consistant à retirer le revêtement isolant et/ou le chemisage interne aux extrémités sur une longueur définie permettant l'installation des équipements de soudage et de contrôle non destructif.

De façon connue, le chemisage interne à l'intérieur desdits éléments de conduite s'arrête à une distance significative, par exemple 100 à 300 mm de l'extrémité desdits éléments de conduite, de manière à ce que l'échauffement de la paroi en acier lors du soudage de leurs extrémités, ne vienne pas endommager ladite chemise interne. Le problème qui se pose alors est d'assurer la protection contre la corrosion de la zone non chemisée comprise entre l'extrémité de la chemise de l'élément de conduite N et l'extrémité de la chemise de l'élément de conduite suivant N+1.

Dans EP 722 824, WO 2010/041016 et WO 2012/017171, on décrit un manchon tubulaire de jonction équipé de fils chauffants par effet joule sous-alimentation électrique permettant de réaliser le soudage dudit manchon avec le chemisage interne présent dans un élément de conduite en acier (dénommé « liner ») par électro-fusion, ledit manchon tubulaire de jonction permettant l'assemblage de deux éléments de conduite bout à bout en assurant la jonction entre les deux liners des deux éléments de conduite d'une part et, d'autre part, en permettant la réalisation de la soudure de jonction entre les deux éléments de conduite.

L'étanchéité du contact manchon/chemisage interne est importante pour éviter tout contact entre l'eau injectée et la zone de la soudure en vis-à-vis dudit manchon tubulaire. Un tel contact direct pourrait en effet conduire, en cas de pénétration d'eau entre le manchon et la conduite, lorsque la conduite est une conduite d'injection d'eau, à des phénomènes électro-chimiques de corrosion de la conduite en acier et de la soudure dans la mesure où ladite liaison mécanique entre le manchon et le chemisage n'est pas nécessairement étanche.

Le but de la présente invention est de s'affranchir des fils chauffants de soudage par électro-fusion qui requièrent des connecteurs et tendent à créer des défauts dans la zone de soudure et des chemins préférentiels de fuites, ce qui peut la rendre potentiellement plus fragile.

De manière générale, le but de la présente invention est de fournir un nouveau type de soudage par fusion de matériaux plastiques au niveau de l'assemblage de deux éléments tubulaires thermoplastiques bout à bout ou se chevauchant qui soit précis, fiable et rapide à réaliser. Un autre but est de fournir un soudage par fusion de matériaux thermoplastiques d'assemblage de deux éléments tubulaires qui soit étanche, et donc supprime le risque de fuites pouvant cheminer le long du fil de chauffe, d'où résulte une soudure non-étanche comme discuté dans WO 2012/017171.

Une fois que les extrémités des éléments de conduite sont soudées entre elles, il est nécessaire aussi de recouvrir la zone de la conduite comprenant la soudure métallique ainsi que les portions du tube de la conduite pour laquelle le revêtement isolant externe thermoplastique a été retiré (cette zone appelée ci-après « zone de retrait du revêtement isolant » ou « cut-back » en anglais) d'un nouveau revêtement isolant en s'assurant que ce recouvrement soit posé de manière totalement étanche avec le reste du revêtement isolant externe de la conduite. A cet effet, la zone de retrait du revêtement isolant peut être recouverte par plusieurs couches successives de différents matériaux polymères. Ce procédé d'application du revêtement isolant externe au niveau de la zone de retrait du revêtement est connu sous le nom de « Field Joint Coating », à savoir « revêtement de joint de conduite » en anglais comme décrit par exemple dans WO 2012/098528. Cette technique de « Field Joint Coating » présente cependant un certain nombre d'inconvénients. Elle nécessite notamment un temps de réalisation relativement long et donc contraignant (typiquement de l'ordre de 20 à 30mn par opération). Cette technique présente en outre un problème d'adhésion sur la zone de retrait du revêtement isolant de la conduite.

Le document WO 2018/065769, qui relève de l'article 54(3) CBE, divulgue une méthode d'assemblage de deux tubes en matériaux thermoplastiques, dans laquelle on réalise ledit assemblage par soudage par chauffage de deux surfaces de contact de révolution appliquées l'une contre l'autre de respectivement deux parties de deux tubes disposées bout à bout ou se chevauchant coaxialement, de préférence des parties d'extrémités, les deux tubes comprenant (a) un premier tube constitué d'un manchon tubulaire de jonction rigide en matériau thermoplastique inséré coaxialement à l'intérieur d'un premier élément de conduite en acier soudé ou destiné à être soudé métalliquement bout à bout avec un deuxième élément de conduite en acier, et (b) un deuxième tube constitué d'un revêtement de matériau thermoplastique appliqué en revêtement interne desdits éléments de conduite en acier, ledit assemblage par soudage étant réalisé par chauffage par induction d'au moins un élément conducteur de soudage disposé à l'interface entre les deux surfaces de contact des deux tubes en matériaux thermoplastiques, en générant un champ magnétique au niveau du ou desdits éléments conducteurs de soudage de sorte que la fusion des matériaux thermoplastiques constitutifs des dites surfaces de contact par ledit chauffage par induction du ou des dits éléments conducteurs de soudage assure une soudure continue et étanche au niveau de ladite interface sur au moins une boucle fermée sur tout le périmètre de ladite interface, la méthode comprenant la génération d'un champ électromagnétique au niveau de ladite interface à l'aide d'une bobine d'induction électromagnétique disposée coaxialement à l'intérieur des deux tubes et des éléments conducteurs de soudage disposés de manière à réaliser une pluralité de zones de soudure circulaires coaxiales disposées côte à côte parallèlement le long de la direction axiale desdits tubes.

Pour ce faire, la présente invention fournit une méthode d'assemblage selon la revendication 1.

Dans la présente demande la notion de « tube en matériau thermoplastique » s'entend à toute disposition de matériau thermoplastique en forme de surface cylindrique ou de surface de révolution, qu'elle soit suffisamment rigide pour tenir en forme tubulaire par elle-même sans support notamment tout type de conduite de fluide ou qu'elle soit insuffisamment rigide pour tenir en forme tubulaire par elle-même et soit donc supporté par ou appliquée contre un support tubulaire rigide notamment tout type de conduite de fluide.

On entend ici par élément conducteur de soudage, un élément en matériau conducteur, par exemple un matériau comprenant un métal, notamment acier, cuivre, aluminium ou laiton ou un matériau semiconducteur comme du carbone, graphite ou carbure de silicium.

On comprend que l'induction est effectuée en générant un champ magnétique au niveau de ladite interface, lequel champ magnétique génère des courants de Foucault dans lesdits éléments conducteurs de soudage. Ces courants de Foucault induisent un réchauffement des éléments conducteurs par effet joule et donc permettent d'effectuer la soudure des surfaces en matériaux thermoplastiques par fusion par effet joule des matériaux thermoplastiques des deux surfaces en contact autour des dits éléments de soudage. La disposition des éléments conducteurs doit permettre d'assurer la soudure des tubes thermoplastiques et assurer une étanchéité entre l'intérieur et l'extérieur des tubes au niveau du joint de soudure.

Dans un mode de réalisation, une dite zone de soudure est réalisée avec un dit élément de soudage constitué par un élément continu en boucle fermée sur tout le périmètre de ladite interface, de préférence une dite zone de soudure circulaire est réalisée avec un anneau de soudage disposé coaxialement aux dits tubes. En d'autres termes, l'axe des dits tubes est perpendiculaire au plan de l'anneau.

Dans un autre mode de réalisation, une dite zone de soudure est réalisée avec une pluralité d'éléments conducteurs de soudage discontinus juxtaposés ou espacés s'étendant sur tout le périmètre de ladite interface, de préférence une pluralité de billes conductrices de soudage disposées circulairement s'étendant sur toute la circonférence de ladite interface en section transversale. On entend ici par « section transversale », une section dans un plan perpendiculaire par rapport à la direction longitudinale axiale des dites surfaces de contact de révolution des dits tubes.

On comprend que lesdits éléments conducteurs de soudage discontinus juxtaposés ou espacés sont disposés suffisamment rapprochés de sorte que la zone de soudure par fusion s'étend sur tout le périmètre de ladite interface en boucle fermée et notamment sur tout l'espace dans les intervalles entre deux éléments de soudage discontinus et consécutifs. On entend ici par « boucle fermée sur tout le périmètre d'une dite surface de révolution », une boucle faisant le tour de l'axe longitudinal dudit tube en circuit fermé.

Plus particulièrement, les éléments de soudage conducteurs présentent une épaisseur relativement faible par rapport à l'épaisseur des tubes au niveau des dites surfaces de contact de manière à ce qu'ils restent entièrement noyés dans les matériaux thermoplastiques au niveau de ladite interface.

Plus particulièrement encore, l'épaisseur des éléments de soudage est inférieur ou égal à la moitié de l'épaisseur du tube de plus petite épaisseur au niveau des dites surfaces de contact où ils sont installés.

Plus particulièrement, on met en œuvre des éléments conducteurs de soudage ayant un pseudo axe de révolution placé parallèlement à celui du champ magnétique et donc le cas échéant de la bobine d'induction générant le champ magnétique, afin de générer des courants de Foucault dans lesdits éléments conducteurs. En effet, ces éléments conducteurs subissent des courants induits qui sont fonction des dimensions des éléments conducteurs et de la fréquence du courant de la bobine.

La forme des éléments conducteurs de soudage doit être choisie de sorte à éviter des concentrations de contraintes après la soudure, des formes lisses type sphériques ou à section circulaire pour un anneau sont préférées.

Le soudage par induction selon la présente invention confère une qualité de soudure accrue sans risque de fuite puisque la soudure s'effectue le long de circuit fermé, et avec un risque de défaillance de soudure réduit, et du fait de la localisation précise et réduite de la zone de soudure, une durée de refroidissement également réduite par rapport à l'électro-fusion avec une bobine et fil de chauffe, la chaleur au point de fusion étant localisée autour des éléments conducteurs de soudage.

Un autre avantage du soudage par induction de la présente invention par rapport au soudage par électro-fusion est de pouvoir réaliser une soudure à distance, c'est-à-dire sans contact direct de la source d'énergie et des éléments de soudage, et de supprimer la contrainte de mise en œuvre de fils chauffants et positionnement des connecteurs électriques des fils chauffants au niveau d'un des tubes, notamment un dit manchon tubulaire de jonction.

Selon la présente invention on peut réaliser une fusion à plus de 100°C sur 1 à 3 mm d'épaisseur avec des éléments de soudage de 0.1 à 2 mm$^2$ de section.

Ainsi, le soudage par induction peut être réalisé sur des épaisseurs de tubes à assembler inférieures à 5 mm voire jusqu'à 3 mm ce qui n'est pas possible par soudage par électro-fusion.

Tous ces avantages du soudage par induction selon la présente invention permettent d'assurer une fiabilité maximale ainsi que des temps d'opération optimisés lors de la réalisation de la soudure ainsi que lors de son utilisation pour l'assemblage de tubes selon la présente invention.

La largeur de chaque zone de soudure ainsi réalisée par soudage par induction est en pratique de 1 à 5 mm, de préférence de 2 à 4 mm pour une section de 1 à 2 mm2. La zone soudée est la zone de contact entre les tubes et les éléments conducteurs, elle dépend de la conductivité thermique du matériau et du temps de soudage. Bien entendu, si on multiplie les éléments conducteurs, on multiplie les soudures et donc la largeur totale soudée.

Dans un mode de réalisation, on espace les zones de soudure d'un pas de translation de 1 à 10 mm, de préférence de 2 à 4 mm.

Chaque anneau de soudage ou succession de billes de soudage réalise une double zone de fusion continue sur toute la circonférence formant une double barrière d'étanchéité de part et d'autre de l'anneau aux niveaux des surfaces de contact où les matériaux thermoplastiques sont directement en contact l'un avec l'autre.

Plus particulièrement, les éléments conducteurs de soudage sont disposés dans au moins une rainure pré-usinée périphérique s'étendant en boucle fermée sur tout le périmètre de ladite interface, de préférence circulairement sur toute la circonférence d'une des deux surfaces de contact.

Plus particulièrement, lesdites surfaces de contact de révolution desdits premier et deuxième tubes à souder se chevauchant sont de forme cylindrique ou tronconique de même axe que l'axe longitudinal XX' desdits tubes.

Plus particulièrement, les matériaux thermoplastiques desdits tubes à assembler par soudage par induction sont par exemple du PE, PP, PVDF, ou PEHD.

Dans un mode de réalisation, on réalise une pluralité de zones circulaires coaxiales côte à côte, de même diamètre sur desdites surfaces de contact cylindriques ou de diamètres croissants sur desdites surfaces de contact tronconiques.

En pratique également, la pluralité desdites zones de soudure s'étend sur une longueur dans la direction longitudinale axiale des surfaces de contact de 30 à 100 mm.

Dans un mode préféré de réalisation, on génère un champ électromagnétique au niveau de ladite interface à l'aide d'une bobine d'induction électromagnétique dans laquelle on met en œuvre des fréquences de courant supérieures à 1kHz.

Selon la présente invention, on génère un champ électromagnétique au niveau de ladite interface à l'aide d'une bobine d'induction électromagnétique disposée coaxialement à l'intérieur des deux tubes.

En effet si on place la bobine à l'extérieur et autour de la conduite en acier, la fréquence doit être choisie en fonction de l'acier et de l'épaisseur de la conduite en acier de telle sorte que la profondeur caractéristique de pénétration du champ magnétique (aussi appelée épaisseur de peau) soit supérieure à l'épaisseur de la conduite en acier. Cette épaisseur delta est donnée par la formule suivante :

$$\delta = \sqrt{\frac{2}{\omega\mu\sigma}}$$

avec $\omega$ (oméga) la pulsation, $\mu$ (mu) la perméabilité magnétique du matériau de la conduite et $\sigma$ (sigma) sa conductivité.

Si la bobine est placée à l'extérieur de la conduite, comme dans WO 2012/051719, EP 2 452 805 et EP 2 886 285, les courants induits ne permettent pas le chauffage des matières thermoplastiques en contact à une température suffisante pour réaliser une soudure car la fusion d'un thermoplastique est typiquement supérieure à 100°C et le rendement de cette opération de chauffage des anneaux est extrêmement faible.

Selon la présente invention, l'étanchéité du soudage est garantie du fait que on réalise une pluralité de zones de soudures circulaires coaxiales côte à côte, d'une part et d'autre part, les éléments conducteurs de soudage, notamment chaque anneau de soudage ou succession de billes de soudage, réalisent pour chaque dite zone de soudage circulaire, une double zone de fusion continue sur toute la circonférence formant une double barrière d'étanchéité de part et d'autre de l'anneau aux niveaux des surfaces de contact où les matériaux thermoplastiques sont directement en contact l'un avec l'autre.

Plus particulièrement, les deux tubes sont constitués par :

- un deuxième tube formé par un tube de chemisage interne de matériau thermoplastique d'un premier élément de conduite unitaire, une première extrémité du deuxième tube ne recouvrant pas une portion d'extrémité dudit premier élément unitaire de conduite, et

- un premier tube formé d'un manchon tubulaire de jonction rigide dont une première extrémité est disposée à l'intérieur dudit premier élément unitaire de conduite en acier au niveau de ladite portion d'extrémité dépourvue de dit chemisage interne, la deuxième extrémité dudit manchon tubulaire de jonction étant disposée ou destinée à être disposée à l'intérieur d'une extrémité dépourvue de dit chemisage interne d'un deuxième élément unitaire de conduite en acier dont le reste de la surface interne est recouverte d'un chemisage interne dit, ledit manchon tubulaire de jonction chevauchant ou étant destiné à chevaucher une zone de soudage métallique des extrémités bout à bout de deux éléments de conduites unitaires,

- ladite première extrémité du premier tube et ladite première extrémité du deuxième tube se chevauchant ou étant de forme tronconiques complémentaires aptes à être disposées bout à bout l'une contre l'autre pour former lesdites surfaces de contact.

Selon d'autres caractéristiques de variante de réalisation:

- ledit chemisage interne présente à au moins une extrémité une partie terminale d'épaisseur réduite par rapport à l'épaisseur de la partie courante dudit chemisage, définissant une forme concave avec une surface interne formant une dite surface de contact de révolution, de préférence tronconique ou cylindrique, de diamètre interne plus grand que celui de la surface interne de la partie courante dudit chemisage, et

- ledit manchon présente à au moins une extrémité une partie terminale d'épaisseur réduite par rapport à l'épaisseur de la partie courante adjacente dudit manchon, ladite partie terminale du manchon définissant une forme convexe apte à chevaucher et buter contre la partie terminale concave d'épaisseur réduite dudit chemisage avec laquelle elle est en contact, ladite partie terminale du manchon définissant une surface externe correspondant à une dite surface de contact de révolution, de préférence tronconique ou cylindrique, de diamètre externe inférieur à celui de la partie courante adjacente du manchon et une surface interne cylindrique sensiblement de même diamètre interne que celui des partie courante du chemisage et partie courante du manchon, et on réalise le soudage par induction de ladite surface interne de révolution constituant une dite surface de contact dudit chemisage et de ladite surface externe de révolution constituant une dite surface de contact dudit manchon.

On comprend que de par leurs formes complémentaires, lesdites partie terminale du manchon et partie terminale d'épaisseur réduite du chemisage permettent l'insertion du manchon contre la surface interne de la partie terminale d'épaisseur réduite du chemisage par simple encastrement en force dudit manchon dans la direction longitudinale axiale XX' à l'intérieur dudit élément de conduite et la surface externe de ladite partie terminale d'épaisseur réduite de manchon en contact avec la surface interne de partie terminale d'épaisseur réduite de chemisage présentent une forme identique complémentaire et sont disposées l'une par rapport à l'autre pour épouser leur contour identique.

La présente invention fournit également un procédé de raccordement de deux éléments unitaires d'une conduite de transport de fluides, chaque élément unitaire de conduite étant réalisé en alliage métallique et étant recouvert d'un revêtement de chemisage interne réalisé dans un matériau thermoplastique à l'exception d'une portion d'extrémité dépourvue de revêtement interne, le procédé comprenant :

- une étape de soudage métallique des deux éléments unitaires de conduite mis bout à bout au niveau de leur portion d'extrémité dépourvue de revêtement de chemisage interne de sorte à former une zone de retrait du revêtement de chemisage interne ;

- une étape de positionnement d'un manchon tubulaire à l'intérieur de la zone de retrait du revêtement interne et en partie autour du revêtement de chemisage interne des deux éléments unitaires de conduite, le manchon étant réalisé dans un matériau thermoplastique ; et

- une étape de fixation étanche par soudage par induction du manchon sur le revêtement de chemisage interne des deux éléments unitaires de conduite par une méthode d'assemblage par soudage par induction selon l'invention définie ci-dessus.

D'autres caractéristiques et avantages de la présente invention apparaîtront à la lumière de la description détaillée qui va suivre, en référence aux figures suivantes.

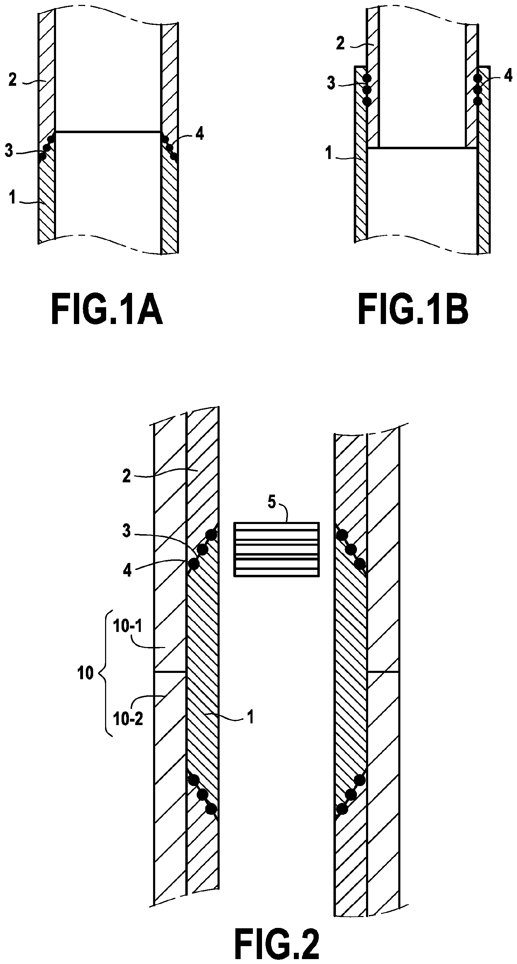

La figure 1A est une représentation schématique en coupe longitudinale de deux tubes coaxiaux 1,2 assemblés bout à bout à leurs extrémités présentant des surfaces tronconiques complémentaires superposées assemblés par soudage par induction à l'aide d'une pluralité d'anneaux de soudage 4 côte à côte disposés à leur interface 3.

La figure 1B est une représentation schématique en coupe longitudinale de deux tubes coaxiaux 1,2 se chevauchant à leurs extrémités superposées assemblées par soudage par induction à l'aide d'une pluralité d'anneaux de soudage 4 côte à côte disposés à leur interface 3.

La figure 2 est une représentation schématique en coupe longitudinale d'un manchon tubulaire interne de jonction 1 entre deux éléments de conduite ou longueurs unitaires de conduites 10-1,10-2 revêtus d'un chemisage interne 2 avec des parties terminales tronconiques de manchon et chemisage bout à bout assemblés par soudage par induction à l'aide d'une pluralité d'anneaux de soudage 4 côte à côte disposés à leur interface 3 et une bobine d'induction 5 à l'intérieur de la conduite.

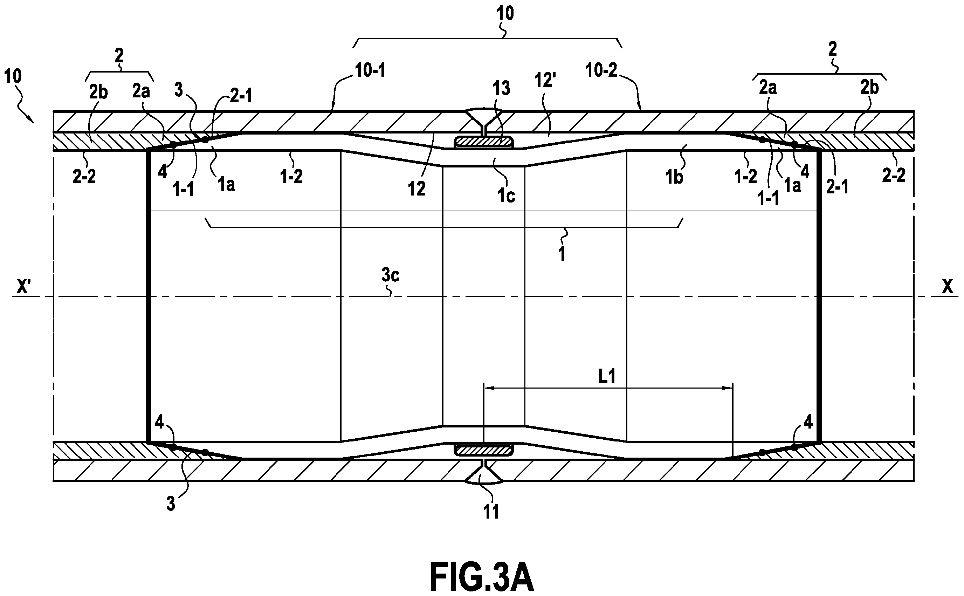

La figure 3A est une coupe en vue de côté de l'assemblage d'une conduite selon la figure 2 détaillant un mode de réalisation du manchon tubulaire interne de jonction entre deux éléments de conduite1.

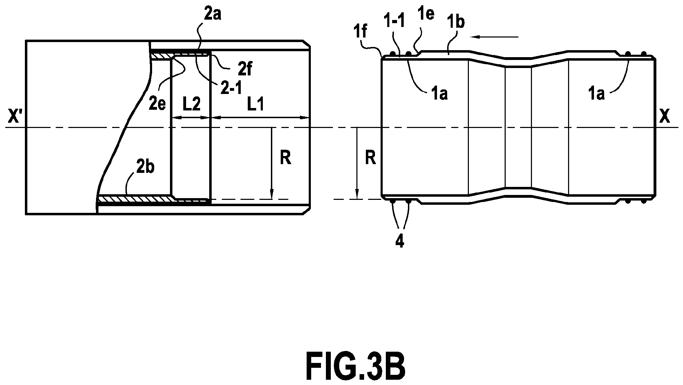

La figure 3B est une coupe en vue de côté d'une conduite en acier 10 équipée d'un chemisage interne 2 usiné selon un cylindre femelle d'axe XX' de rayon interne R et recevant un manchon tubulaire selon un autre mode de réalisation présentant deux extrémités usinées selon un cylindre mâle d'axe XX' de rayon externe sensiblement identique R ou légèrement supérieur.

On entend ici par « interne » et « externe », interne et respectivement externe à la conduite, au manchon ou au chemisage selon les cas.

Sur les figures 1A et 1B, on a représenté les éléments de soudage à section circulaire 4 disposés à l'interface 3 entre les deux surfaces de contact assemblées par soudage par induction de deux tubes en matière thermoplastiques 1 et 2. Ces éléments conducteurs de soudage 4 peuvent être soit des anneaux en acier dont l'axe de révolution est celui des tubes, à savoir ici 3 anneaux, soit des pluralités de billes disposées circulairement à proximité les unes des autres formant ici 3 zones de soudure circulaires disposées côte à côte dans la direction axiale XX' dans les deux cas.

Ces éléments conducteurs de soudage peuvent avoir été préinstallés dans des rainures usinées indifféremment sur l'une des deux surfaces à souder. L'élément conducteur 4 est d'épaisseur relativement faible par rapport à l'épaisseur des tubes lesquels peuvent être usinés en surface pour former une rainure faisant la circonférence du tube, de préférence d'une profondeur laissant l'élément de soudage 4 dépasser de la surface de contact.

Si l'anneau de soudage conducteur présente un diamètre extérieur légèrement inférieur au diamètre intérieur du tube, on peut l'insérer à l'intérieur du tube 1 puis l'appliquer sur une dite surface de contact interne d'un tube en matière thermoplastique rigide (figure 1B) par déformation en extension radiale dans la rainure préalablement usinée. Une fois déformé l'anneau 4 prend une forme circulaire et est parfaitement inséré à l'intérieur de la rainure. Cette déformation peut être effectuée en positionnant à l'intérieur de l'anneau un élément gonflable, type ballon silicone, et en le gonflant.

On peut alternativement appliquer l'anneau de soudage sur la surface externe d'un tube 1 (figure 1A) en déformant le tube à l'aide d'une filière pour diminuer temporairement son diamètre externe, afin d'insérer l'anneau de soudage au niveau d'une rainure préalablement usinée et faisant la circonférence du tube. Une autre filière peut être ensuite utilisée pour rétablir le tube à son diamètre externe initial.

Alternativement encore, on peut mettre en œuvre un anneau fendu (à la manière d'un segment de piston) avec une zone de chevauchement telle qu'elle autorise une extension radiale pour la mise en place de l'anneau dans la rainure de plus grand diamètre avant de se rétracter élastiquement avec un chevauchement moindre. Alternativement encore, on peut mettre en œuvre un segment inséré à l'intérieur du tube, dans la rainure de plus petit diamètre en réalisant une réduction radiale du segment avec un plus grand chevauchement.

Dans le cas de mise en œuvre de billes en acier comme éléments de soudage, on peut réaliser l'insertion des billes par compression à l'intérieur de la rainure sur une des dites surfaces de contact.

On décrit ci-après l'assemblage d'un manchon interne et d'un chemisage interne (ou liner) de conduite.

Sur les figures 2 et 3A-3B, on a représenté un premier mode de réalisation dans lequel on réalise le soudage des extrémités d'un manchon tubulaire de jonction 1 à l'intérieur d'une conduite 10 avec les extrémités d'un chemisage interne de la conduite.

Pour ce mode de réalisation on place une bobine d'induction 5 avec son noyau et ses spires disposés coaxialement à l'intérieur de la conduite de manière à créer un champ magnétique au niveau de l'interface 3 des surfaces de contact 1-1 et 2-2 du manchon et du chemisage en matière thermoplastique.

Sur la figure 3A, on a représenté une conduite 10 comprenant au moins 2 éléments de conduite 10-1, 10-2 à chemisage interne 2 en polyéthylène ou polypropylène d'axe XX' assemblés bout à bout, dans laquelle les extrémités des deux éléments de conduite sont soudées 11 l'une à l'autre. Chaque élément de conduite présente à chaque extrémité une partie terminale conique 2a de demi-angle au sommet α de 5 à 15°, notamment 10°, donc d'épaisseur réduite par rapport à l'épaisseur de la partie courante 2b dudit chemisage, définissant une forme concave avec une surface interne tronconique de révolution comprenant une surface de contact 2-1 de diamètre interne plus grand que celui de la partie courante 2b dudit chemisage et se terminant à une certaine distance L1 de chaque extrémité dudit élément de conduite formant ainsi une partie terminale 12 dépourvue de revêtement interne.

Un manchon tubulaire de jonction 1 rigide en matériau thermoplastique, de préférence identique au matériau thermoplastique du chemisage interne 2, d'axe XX' coïncidant sensiblement avec l'axe des éléments de conduite 10-1, 10-2, de même diamètre externe, juste légèrement inférieur au diamètre interne de la conduite, est inséré à l'intérieur de chacune des extrémités bout à bout des deux éléments de conduite, de manière à chevaucher lesdites parties terminales 2a des deux chemisages. Ledit manchon 1 présente à chaque extrémité longitudinale une partie terminale 1a définissant une forme conique convexe apte à chevaucher la partie terminale dudit chemisage 2a avec laquelle elle est en contact. Ladite partie terminale 1a du manchon définit une surface externe tronconique 1-1 de même angle au sommet a que ladite surface interne tronconique de ladite partie terminale concave dudit chemisage. Les parties terminales du manchon de forme conique définissent une surface interne 1-2 cylindrique sensiblement de même diamètre interne que celui desdites partie courante 2b du chemisage.

Sur la figure 3A, le manchon présente dans une partie centrale 1c, c'est-à-dire environ à mi-longueur dans sa direction longitudinale axiale XX', un diamètre externe réduit inférieur aux diamètres externes de ses parties courantes 1b adjacentes à ladite partie centrale 1c de manière à ménager un espace annulaire 12', et où l'on peut placer une pièce annulaire 13 de protection thermique du manchon lors du soudage des extrémités des éléments de conduite, lesdites parties courantes 1b du manchon présentant un diamètre externe sensiblement identique au diamètre interne des extrémités non recouvertes dudit chemisage des éléments de conduite assemblées.

On entend ici par « partie courante du manchon », la partie centrale du manchon située entre les deux parties terminales aux deux extrémités longitudinales du manchon.

La paroi tubulaire dudit manchon présente une partie centrale 1c apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique 13 est d'épaisseur faible et peut être elle-même aussi déformable dans les mêmes conditions de pression interne à l'intérieur de la conduite pour adopter une épaisseur réduite, de préférence une épaisseur inférieure à 5mm, de préférence encore inférieure à 2mm, ladite pièce de protection thermique étant de préférence encore constituée de fibres de céramique sous une forme similaire à du coton hydrophile.

Sur la figure 3B, lesdites surface interne de la partie terminale d'épaisseur réduite 2a du chemisage et surface externe de la partie terminale d'épaisseur réduite 1a du manchon, en contact l'une contre l'autre sont de même forme cylindrique de même axe XX' que les dit manchon et dite conduite, l'extrémité de la partie terminale d'épaisseur réduite du manchon venant buter contre un épaulement 2e délimitant les surfaces internes desdites partie courante 2b et partie terminale d'épaisseur réduite 2a du chemisage.

Dans ce mode de réalisation à surfaces de contact cylindriques 1-1 et 2-1, ledit manchon est inséré contre la partie terminale d'épaisseur réduite 2a du chemisage jusqu'à ce que l'extrémité 2f du chemisage vienne buter contre un épaulement le délimitant ladite partie courante 1b du manchon et ladite partie terminale de plus faible épaisseur 1a du manchon, et/ou ledit manchon est inséré contre la partie terminale d'épaisseur réduite 2a du chemisage jusqu'à ce que l'extrémité 1f du manchon vienne buter contre l'épaulement 2e délimitant la partie courante 2b et ladite partie terminale 2a d'épaisseur réduite du chemisage.

Sur la figure 3B on a effectué de manière similaire un usinage cylindrique d'axe X'X et de rayon R sur une longueur L2 et à une distance L1 de l'extrémité de ladite conduite pour dégager une partie terminale 12 dépourvue de revêtement.

Ainsi, plusieurs modes d'assemblage entre les chemises internes et les manchons tubulaires de jonction sont possibles et présentent chacun un avantage vis-à-vis de l'épaisseur du chemisage interne 2. La valeur de l'angle a entre l'axe XX' et la génératrice de la surface de la partie terminale la du manchon en contact avec la partie terminale 2a de la chemise peut varier de 0 à 90°. Pour les modes de réalisation des figures 3A et 3B, montrant une partie terminale la de forme convexe conique, la surface externe conique présente un demi-angle au sommet $\alpha$ compris entre 0 (figure 3B) et 90° (forme dite frontale non représentée).

Dans le cas de chemises de faible épaisseur, le mode préféré est celui d'un chevauchement avec un manchon d'épaisseur constante et diamètre constant, par exemple 3 à 5mm. Pour les épaisseurs supérieur à 5mm, par exemple 6 à 20mm, on utilisera avantageusement le mode conique (figure 3A) ou cylindrique avec un manchon à épaisseur non constante aux extrémités (figure 3B). Pour le mode conique, un angle $\alpha$ compris entre 5° et 45°, de préférence 10° permet lors de la mise en pression de ne pas créer de rupture de pente. Pour les moyennes épaisseurs, on utilisera avantageusement le mode cylindrique de la figure 3B. Pour les fortes épaisseurs, par exemple supérieure à 20mm, on utilisera avantageusement le mode frontal de la section droite avec des anneaux concentriques (non représenté).

Le procédé selon l'invention permet d'obtenir des zones de soudure circulaires au niveau de l'interface 3 entre les surfaces de contact 1-1 et 2-1 de parfaite qualité et extrêmement résistante avec une ligne de soudure de part et d'autre de chaque élément 4, sur une profondeur et une largeur inférieur à 5 mm permettant de souder des épaisseurs de tubes jusqu'à 25 mm d'épaisseur (non limitatif), et plus particulièrement de 5 à 25mm d'épaisseur. On peut ainsi réaliser plusieurs zones de soudure circulaires s'étendant dans la direction axiale par l'intermédiaire d'une pluralité de cercles côte à côte, espacés tous les 5 mm par exemple, et ensemble s'étendant sur une distance de 20 à 100 mm dans la direction de XX'.

Dans un autre mode de réalisation, notamment dans le cas de chemisage interne où liner et ledit manchon sont de plus faible épaisseur, notamment inférieure à 5mm, on met en œuvre :

- un dit chemisage interne présentant à au moins une extrémité une partie terminale de même épaisseur que l'épaisseur de la partie courante dudit chemisage, définissant une surface interne cylindrique correspondant à une dite surface de contact, de même diamètre interne que celui de la surface interne de la partie courante dudit chemisage, et

- ledit manchon présente à au moins une extrémité une partie terminale de même épaisseur que l'épaisseur de la partie courante adjacente dudit manchon, ladite partie terminale du manchon définissant :

- une surface externe cylindrique correspondant à une dite surface de contact de révolution, de diamètre externe sensiblement identique ou légèrement supérieur (manchon inséré en force) à celui de la surface interne dudit chemisage et

- une surface interne cylindrique de diamètre interne inférieur à celui de la surface interne dudit chemisage,

- ladite partie terminale du manchon étant ainsi apte à chevaucher de manière superposée la partie terminale dudit chemisage avec laquelle elle est en contact, et

- on réalise le soudage par induction de ladite surface interne cylindrique constituant une dite surface de contact dudit chemisage et de ladite surface externe cylindrique constituant une dite surface de contact dudit manchon.

Un tel mode de réalisation est doublement avantageux :

a) tout d'abord, dans ce mode de réalisation, la mise en place du tube de chemisage est plus aisée car :

- du fait de la faible épaisseur du chemisage et surtout du poids plus léger de l'ensemble, la traction requise sur le tube de chemisage pour son étirement lors de sa pose est réduite, et

- du fait de la faible épaisseur du manchon, lesdites surfaces de contact cylindriques desdits chemisage interne et dit manchon à souder se chevauchant peuvent être superposées sans requérir d'usinage du chemisage interne, et

b) en second lieu, en cas de superposition des parties terminales du manchon et du chemisage, le différentiel de diamètre interne entre la surface interne dudit chemisage et celle dudit manchon est suffisamment faible pour ne plus perturber l'écoulement du fluide dans la conduite.

L'épaisseur requise du chemisage interne est principalement une conséquence de la longueur de la conduite dans laquelle on l'applique par étirement plastique compte tenu du risque de le déchirer ou de l'étirer irréversiblement.

Un tel mode de réalisation avec des chemisages internes de faible épaisseur inférieure à 5 mm est possible pour des longueurs de conduites sur des éléments unitaires de conduite ou des rames de moins de 100 m, voire moins de 50 m pour des épaisseurs jusqu'à 3 mm.

D'autre part, un tel mode de réalisation sur des épaisseurs de chemisage interne et manchon inférieure à 5 mm n'est pas réalisable en cas de soudage par électro-fusion du fait que pour l'électro-fusion le manchon doit être traversé par le fil chauffant pour rejoindre sa surface externe lequel fil chauffant provoquerait alors la fusion du manchon sur toute son épaisseur.

Le mode de réalisation avec une zone de soudure par induction est avantageux en ce qu'il permet d'assurer une étanchéité plus complète et plus fiable de la surface de contact entre lesdites parties terminales du manchon et du chemisage afin d'éviter tout risque de contact de soudure métallique avec l'eau des conduites lorsque ladite conduite véhicule de l'eau et ainsi éviter tout risque d'envahissement de la zone située entre la surface externe du manchon et la surface interne desdits éléments de conduite, ce qui ne manquerait pas de créer un rétrécissement du diamètre interne du manchon, c'est-à-dire de la section de passage du fluide, et donc des perturbations dans l'écoulement du fluide à l'intérieur du manchon, sans compter le risque de contact de ladite soudure avec l'eau, lorsque ladite conduite véhicule de l'eau.

Plus particulièrement, la conduite à réaliser est une conduite de liaison soit reposant sur le fond de la mer, soit une liaison fond/surface apte à être posée en milieu sous-marin, et lesdits éléments de conduite ont une longueur de 20 à 50 m, de diamètre interne de 10 à 60cm et ledit manchon présente une longueur de 45 à 600cm. Il s'agit plus particulièrement de conduite d'injection d'eau sous pression dans des puits de champs pétroliers, laquelle pression est toujours supérieure à 5MPa et plus particulièrement de 25 à 70 MPa (250 à 700 bars). Ce type de conduite comme rappelé ci-dessus est particulièrement sollicitée au niveau desdites soudures métalliques de sorte que celles-ci doivent être protégées au maximum de toute corrosion par contact avec l'eau de mer, surtout dans le cas de liaisons fond-surface, car dans ce cas la conduite est perpétuellement en mouvement en raison des effets de la houle du vent et du courant s'exerçant sur le support flottant en surface et de ce fait soumise à des contraintes de fatigue extrêmes. De plus, les propriétés du fluide véhiculé, peuvent amener à devoir inclure une surépaisseur d'acier sacrificiel important, ayant un impact fort sur l'installation de ces conduites. La mise en place d'un chemisage en plastique permet de supprimer ce besoin.

Le soudage par induction consiste à souder directement le manchon 1 sur le revêtement interne 2 à l'aide d'un ou plusieurs éléments conducteurs 4 intégrées dans le manchon dès la fabrication de celui-ci comme décrit précédemment, le manchon étant réalisé dans un matériau thermoplastique qui est compatible thermochimiquement avec le matériau thermoplastique des revêtements isolant externes.

Ainsi, le manchon 1 intègre sur sa surface interne, et au niveau de chacune de ses deux extrémités longitudinales, une pluralité d'anneaux ou billes en acier 4 dans des rainures et dépassant de celles-ci pour venir en contact avec les portions du revêtement 2 recouvertes par ledit manchon.

Au cours de l'étape de soudage proprement dite, ces éléments conducteurs 4 sont chauffés par induction à l'aide de la bobine d'induction pour provoquer une fusion en surface du matériau constitutif du manchon apte à assurer une fixation étanche du manchon sur le revêtement isolant externe au niveau de leur interface 3. Plus précisément, la dissipation par effet Joule de la puissance électrique fournie aux éléments conducteurs 4 a pour effet de provoquer une fusion de la surface intérieure du matériau constitutif du manchon. Le mélange intime du matériau du manchon et du matériau des revêtements internes des tubes permet d'assurer une cohésion et une étanchéité parfaites entre le manchon et ces revêtements internes.

**Revendications**

1. Méthode d'assemblage de deux tubes (1,2) en matériaux thermoplastiques, dans laquelle on réalise ledit assemblage par soudage par chauffage de deux surfaces de contact de révolution appliquées l'une contre l'autre de respectivement deux parties de deux tubes (1,2) disposées bout à bout ou se chevauchant coaxialement (XX'), de préférence des parties d'extrémités (1a, 1b), les deux tubes comprenant (a) un premier tube (1) constitué d'un manchon tubulaire de jonction rigide en matériau thermoplastique inséré coaxialement à l'intérieur d'un premier élément de conduite en acier soudé ou destiné à être soudé métalliquement bout à bout avec un deuxième élément de conduite en acier, et (b) un deuxième tube (2) constitué d'un revêtement de matériau thermoplastique appliqué en revêtement interne desdits éléments de conduite en acier, ledit assemblage par soudage étant réalisé par chauffage par induction d'au moins un élément conducteur de soudage (4) en acier, disposé à l'interface (3) entre les deux surfaces de contact des deux tubes en matériaux thermoplastiques (1,2), en générant un champ magnétique au niveau du ou desdits éléments conducteurs de soudage de sorte que la fusion des matériaux thermoplastiques constitutifs des dites surfaces de contact par ledit chauffage par induction du ou des dits éléments conducteurs de soudage assure une soudure continue et étanche au niveau de ladite interface sur au moins une boucle fermée sur tout le périmètre de ladite interface, la méthode comprenant la génération d'un champ électromagnétique au niveau de ladite interface (3) à l'aide d'une bobine d'induction électromagnétique (5) disposée coaxialement à l'intérieur des deux tubes et des éléments conducteurs (4) de soudage disposés de manière à réaliser une pluralité de zones de soudure circulaires coaxiales disposées côte à côte parallèlement le long de la direction axiale (XX') desdits tubes.

**2.** Méthode selon la revendication 1, **caractérisée en ce que** chaque dite zone de soudure est réalisée avec un dit élément conducteur de soudage constitué par un élément continu en boucle fermée sur tout le périmètre de ladite interface.

**3.** Méthode selon la revendication 2, **caractérisée en ce que** chaque dite zone de soudure circulaire est réalisée avec un anneau de soudage disposé coaxialement aux dits tubes.

**4.** Méthode selon la revendication 1 ou 2, **caractérisée en ce que** chaque dite zone de soudure est réalisée avec une pluralité d'éléments conducteurs de soudage discontinus juxtaposés ou espacés s'étendant sur tout le périmètre de ladite interface.

**5.** Méthode selon la revendication 4, **caractérisée en ce que** lesdits éléments conducteurs de soudage discontinus juxtaposés ou espacés sont constitués par une pluralité de billes conductrices de soudage disposées circulairement s'étendant sur toute la circonférence de ladite interface en section transversale.

**6.** Méthode selon l'une des revendications 1 à 5, **caractérisée en ce que** les éléments conducteurs de soudage présentent une épaisseur inférieure ou égale à la moitié de l'épaisseur du tube de plus petite épaisseur au niveau des dites surfaces de contact où ils sont installés.

**7.** Méthode selon l'une des revendications 1 à 6, **caractérisée en ce que** les éléments conducteurs de soudage (4) sont disposés dans au moins une rainure pré-usinée périphérique s'étendant en boucle fermée sur tout le périmètre de ladite interface, de préférence circulairement.

**8.** Méthode selon l'une des revendications 1 à 7, **caractérisée en ce que** les deux tubes sont constitués par :

- le deuxième tube formé par un tube de chemisage interne de matériau thermoplastique d'un premier élément unitaire de conduite en acier, une première extrémité du deuxième tube ne recouvrant pas une portion (12) d'extrémité dudit premier élément unitaire de conduite, et
- le premier tube formé d'un manchon tubulaire de jonction rigide dont une première extrémité est disposée à l'intérieur dudit premier élément unitaire de conduite en acier au niveau de ladite portion d'extrémité dépourvue de dit chemisage interne, la deuxième extrémité dudit manchon tubulaire de jonction étant disposée ou destinée à être disposée à l'intérieur d'une extrémité dépourvue de dit chemisage interne d'un deuxième élément unitaire de conduite en acier dont le reste de la surface interne est recouverte d'un chemisage interne dit, ledit manchon tubulaire de jonction chevauchant ou étant destiné à chevaucher une zone de soudage métallique (11) des extrémités bout à bout de deux éléments de conduites unitaires.

**9.** Méthode selon la revendication 8, **caractérisée en ce que** ladite première extrémité du premier tube et ladite première extrémité du deuxième tube se chevauchant l'une par-dessus l'autre pour former lesdites surfaces de contact.

**10.** Méthode selon la revendication 9, **caractérisée en ce que** ledit chemisage interne ou liner et ledit manchon sont d'épaisseur inférieure à 5mm, et on met en œuvre :

- un dit chemisage interne présentant à au moins une extrémité une partie terminale de même épaisseur que l'épaisseur de la partie courante dudit chemisage, définissant une surface interne cylindrique correspondant à une dite surface de contact, de même diamètre interne que celui de la surface interne de la partie courante dudit chemisage,
- ledit manchon présentant à au moins une extrémité une partie terminale de même épaisseur que l'épaisseur de la partie courante adjacente dudit manchon, ladite partie terminale du manchon définissant :
- une surface externe cylindrique correspondant à une dite surface de contact de révolution, de diamètre externe sensiblement identique ou légèrement supérieur à celui de la surface interne dudit chemisage et
- une surface interne cylindrique de diamètre interne inférieur à celui de la surface interne dudit chemisage,
- ladite partie terminale du manchon étant ainsi apte à chevaucher de manière superposée la partie terminale dudit chemisage avec laquelle elle est en contact, et
- on réalise le soudage par induction de ladite surface interne cylindrique constituant une dite surface de contact dudit chemisage et de ladite surface externe cylindrique constituant une dite surface de contact dudit manchon.

**11.** Méthode selon la revendication 8, **caractérisée en ce que** ladite première extrémité du premier tube et ladite première extrémité du deuxième tube étant de formes tronconiques complémentaires aptes à être disposées bout à bout l'une contre l'autre pour former lesdites surfaces de contact.

**12.** Procédé de raccordement de deux éléments unitaires (10-1, 10-2) d'une conduite de transport de fluides, chaque élément unitaire de conduite étant réalisé en acier et étant recouvert d'un revêtement de chemisage interne (2) réalisé dans un matériau thermoplastique à l'exception d'une portion (12) d'extrémité dépourvue de revêtement interne, le procédé comprenant :

- une étape de soudage métallique (11) des deux éléments unitaires de conduite mis bout à bout au niveau de leur portion d'extrémité dépourvue de revêtement de chemisage interne de sorte à former une zone de retrait (12) du revêtement de chemisage interne ;
- une étape de positionnement d'un manchon tubulaire (1) à l'intérieur de la zone de retrait du revêtement interne et en partie autour du revêtement de chemisage interne des deux éléments unitaires de conduite, le manchon étant réalisé dans un matériau thermoplastique ; et
- une étape de fixation étanche par soudage par induction du manchon sur le revêtement de chemisage interne des deux éléments unitaires de conduite par une méthode d'assemblage selon l'une des revendications 1 à 11.

**Patentansprüche**

1. Verfahren zum Zusammenbau von zwei Rohren (1, 2) aus thermoplastischen Materialien, wobei der Zusammenbau durch Schweißen durch Erwärmen von zwei Rotationskontaktflächen, die gegeneinander angewandt werden, von jeweils zwei Teilen von zwei Rohren (1, 2) umgesetzt wird, die Ende an Ende angeordnet sind oder sich koaxial (XX') überlappen, bevorzugt von Endteilen (1a, 1b), wobei die zwei Rohre (a) ein erstes Rohr (1), das aus einer röhrenförmigen steifen Verbindungshülse aus thermoplastischem Material besteht, die koaxial in das Innere eines ersten Leitungselements aus Stahl eingefügt ist, das metallisch Ende an Ende mit einem zweiten Leitungselement aus Stahl geschweißt ist oder dazu gedacht ist, derart geschweißt zu werden, und (b) ein zweites Rohr (2) umfassen, das aus einer Beschichtung aus thermoplastischem Material besteht, das als innere Beschichtung der Leitungselemente aus Stahl aufgetragen ist, wobei der Zusammenbau durch Schweißen durch Induktionserwärmen von zumindest einem Leitungsschweißelement (4) aus Stahl umgesetzt wird, das an der Schnittstelle (3) zwischen den zwei Kontaktflächen der zwei Rohre aus thermoplastischen Materialien (1, 2) angeordnet ist, indem ein Magnetfeld auf Höhe des oder der Leitungsschweißelemente erzeugt wird, sodass die Fusion der thermoplastischen Materialien, welche die Kontaktflächen bilden, durch die Induktionserwärmung des oder der Leitungsschweißelements/e eine durchgehende und dichte Schweißung auf Höhe der Schnittstelle auf zumindest einer geschlossenen Schleife über den gesamten Umfang der Schnittstelle sicherstellt, wobei das Verfahren die Erzeugung eines elektromagnetischen Feldes auf Höhe der Schnittstelle (3) mit Hilfe einer elektromagnetischen Induktionsspule (5), die koaxial im Inneren der zwei Rohre angeordnet ist, und der Leitungsschweißelemente (4) umfasst, die angeordnet sind, um mehrere kreisförmige koaxiale Schweißzonen umzusetzen, die Seite an Seite parallel entlang der axialen Richtung (XX') der Rohre angeordnet sind.

2. Verfahren nach Anspruch 1, **dadurch gekennzeichnet, dass** jede Schweißzone mit einem Leitungsschweißelement umgesetzt wird, das aus einem durchgehenden Element in geschlossener Schleife über den gesamten Umfang der Schnittstelle besteht.

3. Verfahren nach Anspruch 2, **dadurch gekennzeichnet, dass** jede kreisförmige Schweißzone mit einem Schweißring umgesetzt wird, der koaxial zu den Rohren angeordnet ist.

4. Verfahren nach Anspruch 1 oder 2, **dadurch gekennzeichnet, dass** jede Schweißzone mit mehreren unterbrochenen benachbarten oder beabstandeten Leitungsschweißelementen umgesetzt wird, die sich über den gesamten Umfang der Schnittstelle erstrecken.

5. Verfahren nach Anspruch 4, **dadurch gekennzeichnet, dass** die unterbrochenen benachbarten oder beabstandeten Leitungsschweißelemente aus mehreren leitfähigen Schweißkügelchen bestehen, die kreisförmig angeordnet sind und sich über den gesamten Umfang der Schnittstelle im Querschnitt erstrecken.

6. Verfahren nach einem der Ansprüche 1 bis 5, **dadurch gekennzeichnet, dass** die Leitungsschweißelemente eine Dicke aufweisen, die kleiner als die oder gleich der Hälfte der Dicke des Rohres mit der kleinsten Dicke auf Höhe der Kontaktflächen ist, wo sie installiert sind.

7. Verfahren nach einem der Ansprüche 1 bis 6, **dadurch gekennzeichnet, dass** die Leitungsschweißelemente (4) in zumindest einer vorbearbeiteten umlaufenden Nut angeordnet sind, die sich in geschlossener Schleife, bevorzugt kreisförmig, über den gesamten Umfang der Schnittstelle erstreckt.

8. Verfahren nach einem der Ansprüche 1 bis 7, **dadurch gekennzeichnet, dass** die zwei Rohre bestehen aus:

- dem zweiten Rohr, das durch ein inneres Auskleidungsrohr aus thermoplastischem Material aus einem ersten einstückigen Leitungselement aus Stahl gebildet ist, wobei ein erstes Ende des zweiten Rohres einen Endabschnitt (12) des ersten einstückigen Leitungselements nicht bedeckt, und

- dem ersten Rohr, das aus einer röhrenförmigen steifen Verbindungshülse gebildet ist, wobei ein erstes Ende im Inneren des ersten einstückigen Leitungselements aus Stahl auf Höhe des Endabschnittes angeordnet ist, der frei von der inneren Auskleidung ist, wobei das zweite Ende der röhrenförmigen Verbindungshülse im Inneren eines Endes angeordnet ist, das frei von der inneren Auskleidung eines zweiten einstückigen Leitungselements aus Stahl ist, oder dazu gedacht ist, derart angeordnet zu werden, wobei der Rest der inneren Oberfläche mit einer inneren Auskleidung bedeckt ist, wobei die röhrenförmige Verbindungshülse eine metallische Schweißzone (11) von Enden Ende an Ende von zwei einstückigen Leitungselementen überlappt oder dazu gedacht ist, diese zu überlappen.

9. Verfahren nach Anspruch 8, **dadurch gekennzeichnet, dass** das erste Ende des ersten Rohres und das erste Ende des zweiten Rohres sich eines über dem anderen überlappen, um die Kontaktflächen zu bilden.

10. Verfahren nach Anspruch 9, **dadurch gekennzeichnet, dass** die innere Auskleidung oder Verkleidung und die Hülse eine Dicke aufweisen, die kleiner als 5 mm ist, und umgesetzt wird:

   - eine innere Auskleidung, die an zumindest einem Ende einen terminalen Teil mit gleicher Dicke wie die Dicke des laufenden Teils der Auskleidung aufweist und eine innere zylindrische Fläche, die einer Kontaktfläche entspricht, mit gleichem inneren Durchmesser wie derjenige der inneren Fläche des laufenden Teils der Auskleidung definiert,
   - die Hülse, die an zumindest einem Ende einen terminalen Teil mit gleicher Dicke wie die Dicke des laufenden Teils benachbart zu der Hülse aufweist, wobei der terminale Teil der Hülse definiert:
   - eine externe zylindrische Fläche, die einer Rotationskontaktfläche entspricht, mit einem externen Durchmesser, der im Wesentlichen mit demjenigen der inneren Fläche der Auskleidung identisch oder etwas größer ist, und
   - eine innere zylindrische Fläche mit einem inneren Durchmesser, der kleiner als derjenige der inneren Fläche der Auskleidung ist,
   - wobei der terminale Teil der Hülse auch geeignet ist, um auf überlagerte Weise den terminalen Teil der Auskleidung, mit der er in Kontakt ist, zu überlappen, und
   - die Induktionsschweißung der inneren zylindrischen Fläche, die eine Kontaktfläche der Auskleidung darstellt, und der externen zylindrischen Fläche, die eine Kontaktfläche der Hülse darstellt, umgesetzt wird.

11. Verfahren nach Anspruch 8, **dadurch gekennzeichnet, dass** das erste Ende des ersten Rohres und das erste Ende des zweiten Rohres komplementäre kegelstumpfförmige Formen aufweisen, die dazu geeignet sind, Ende an Ende aneinander angeordnet zu werden, um die Kontaktflächen zu bilden.

12. Prozess zur Verbindung von zwei einstückigen Elementen (10-1, 10-2) einer Fluidtransportleitung, wobei jedes einstückige Leitungselement aus Stahl umgesetzt ist und mit einer Beschichtung aus innerer Auskleidung (2) bedeckt ist, die aus einem thermoplastischen Material umgesetzt ist, mit Ausnahme eines Endabschnittes (12), der frei von einer inneren Beschichtung ist, wobei der Prozess umfasst:

   - einen Schritt des metallischen Schweißens (11) von zwei einstückigen Leitungselementen, die Ende an Ende auf Höhe ihres Endabschnittes gebracht sind, der frei von einer Beschichtung aus innerer Auskleidung ist, um eine Rückzugszone (12) der Beschichtung der inneren Auskleidung zu bilden,
   - einen Schritt des Positionierens einer röhrenförmigen Hülse (1) im Inneren der Rückzugszone der inneren Auskleidung und teilweise um die Beschichtung der inneren Auskleidung von zwei einstückigen Leitungselementen herum, wobei die Hülse aus einem thermoplastischen Material umgesetzt ist, und
   - einen Schritt des dichten Befestigens der Hülse auf der Beschichtung der inneren Auskleidung der zwei einstückigen Leitungselemente durch Induktionsschweißen durch ein Verfahren zum Zusammenbau nach einem der Ansprüche 1 bis 11.

**Claims**

1. A method of assembling together two tubes (1, 2) of thermoplastic materials, wherein said assembly is performed by welding by heating two contact surfaces of revolution that are pressed one against the other and that belong respectively to two portions, preferably end portions (1a, 1b), of two tubes (1, 2) placed in abutment or overlapping coaxially (XX'), the two tubes comprising a) a first tube (1) constituted by a rigid tubular junction sleeve made of thermoplastic material inserted coaxially inside a first steel pipe element that is metal-welded or that is to be metal-welded in abutment with a second steel pipe element, and b) a second tube (2) constituted by a coating of thermoplastic material applied as a liner of said steel pipe elements, wherein said assembly is performed by welding by induction heating at least one conductive welding element (4) made of steel, and that is arranged at the interface (3) between the two contact surfaces, of the two tubes (1, 2) made of thermoplastic materials, by generating a magnetic field at said conductive welding element(s) so that the melting of the thermoplastic materials constituting said contact surfaces as a result of said induction heating of said conductive welding element(s) provides a continuous and leakproof weld at said interface over at least one closed loop around the entire perimeter of said interface, the method comprising the generation of an electromagnetic field at said interface (3) using an electromagnetic induction coil (5) arranged coaxially inside the two tubes and conductive welding elements (4) arranged so as to provide a plurality of coaxial circular welding zones arranged side by side in parallel along the axial direction (XX') of said tubes.

2. A method according to claim 1, **characterized in that** each said weld zone is made with a said conductive welding element constituted by an element that is continuous in a closed loop around the entire perimeter of said interface.

3. A method according to claim 2, **characterized in that** each said circular weld zone is made with a welding ring arranged coaxially with said tubes.

4. A method according to claim 1 or claim 2, **characterized in that** each said weld zone is made with a plurality of discontinuous conductive welding elements that are juxtaposed or spaced apart extending around the entire perimeter of said interface.

5. A method according to claim 4, **characterized in that** said discontinuous conductive welding elements that are juxtaposed or spaced apart are constituted by a plurality of conductive welding balls arranged circularly so as to extend around the entire circumference of said interface in cross-section.

6. A method according to any one of claims 1 to 5, **characterized in that** the conductive weld elements present a thickness that is less than or equal to half the thickness of the tube of smaller thickness at said contact surfaces where they are installed.

7. A method according to any one of claims 1 to 6, **characterized in that** the conductive welding elements (4) are arranged in at least one peripheral pre-machined groove extending in a closed loop around the entire perimeter of said interface, preferably circularly.

8. A method according to any one of claims 1 to 7, **characterized in that** the two tubes are constituted by:

- the second tube formed by a liner tube made of thermoplastic material for a first unit pipe element made of steel, a first end of the second tube not covering an end portion (12) of said first unit pipe element; and
- the first tube formed by a rigid tubular junction sleeve having a first end arranged inside said first unit pipe element made of steel at said end portion that is not provided with said liner, the second end of said tubular junction sleeve being arranged or being for arranging inside an end of a second unit pipe element made of steel that does not have said liner, with the remainder of the inner surface of the second unit pipe element being covered in a said liner, said tubular junction sleeve overlapping or being for overlapping a metal weld zone (11) between the abutting ends of two unit pipe elements.

9. A method according to claim 8, **characterized in that** said first end of the first tube and said first end of the second tube overlap one on the other to form said contact surfaces.

10. A method according to claim 9, **characterized in that** said liner and said sleeve are of thickness less than 5 mm, and use is made of:

- a said liner presenting at at least one end an end portion having the same thickness as the thickness of the main portion of said liner, defining a cylindrical inner surface corresponding to a said contact surface having the same inside diameter as the inside diameter of the inner surface of the main portion of said liner; and
- said sleeve presenting at at least one end an end portion having the same thickness as the thickness of the adjacent main portion of said sleeve, said end portion of the sleeve defining:
- a cylindrical outer surface corresponding to a said contact surface of revolution, of outside diameter substantially identical to or slightly greater than the outside diameter of the inner surface of said liner; and
- a cylindrical inner surface of inside diameter less than the inside diameter of the inner surface of said liner;
- said end portion of the sleeve thus being suitable for overlapping in superposed manner the end portion of said liner with which it is in contact; and

- induction welding said cylindrical inner surface constituting a said contact surface of said liner with said cylindrical outer surface constituting a said contact surface of said sleeve.

11. A method according to claim 8, **characterized in that** said first end of the first tube and said first end of the second tube are of complementary frustoconical shapes suitable for being arranged in abutment one against the other to form said contact surfaces.

12. A process for connecting together two unit elements (10-1, 10-2) of a fluid transport pipe, each unit pipe element being made of steel and being covered in a liner (2) made of a thermoplastic material with the exception of an end portion (12) not having a liner, the process comprising:

> - a step of metal welding (11) together the two unit pipe elements placed in abutment at their end portions not having a liner so as to form a cut-back zone (12) in the liner;
> - a step of positioning a tubular sleeve (1) inside the cut-back zone in the liner and in part around the liners of the two unit pipe elements, the sleeve being made of a thermoplastic material; and
> - a step of fastening the sleeve on the liners of the two unit pipe elements in leakproof manner by induction welding using an assembly method according to any one of claims 1 to 11.

**FIG.1A**

**FIG.1B**

**FIG.2**

FIG.3A

# FIG.3B

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 722824 A
- WO 2010041016 A
- WO 2012017171 A
- WO 2012098528 A
- WO 2018065769 A
- WO 2012051719 A
- EP 2452805 A
- EP 2886285 A